(19) Europäisches Patentamt / European Patent Office / Office européen des brevets

(11) **EP 2 605 209 A1**

(12) **EUROPEAN PATENT APPLICATION**

(43) Date of publication:
**19.06.2013 Bulletin 2013/25**

(51) Int Cl.:
**G06Q 50/14** (2012.01)          **G06Q 10/02** (2012.01)
**G06Q 10/08** (2012.01)

(21) Application number: **11306650.0**

(22) Date of filing: **13.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus**
**06410 Biot (FR)**

(72) Inventors:
• **Nivet, Patrick**
  **06600 Antibes (FR)**

• **Ficheau, Fabien**
  **06110 Le Cannet (FR)**
• **Armand, Maxime**
  **06600 Antibes (FR)**
• **Peteuil, Bastien**
  **06600 Antibes (FR)**
• **Ossola, Baptiste**
  **06600 Antibes (FR)**

(74) Representative: **Hautier, Nicolas**
**Cabinet Hautier**
**20, rue de la Liberté**
**06000 Nice (FR)**

(54) **System and method for providing enhanced information at the inventory**

(57)    Computer-implemented travel reservation and booking system that comprises a reservation system and an inventory system coupled to an output of the reservation system to receive notifications from the reservation system. The inventory system has an output coupled with an inventory display system. The reservation system includes at least one data processor operating under control of software instructions stored in at least one memory to receive passenger name records (PNRs) associated with a particular segment and date and, for each received PNR, to determine if the received PNR has been priced or not; if the received PNR has actually been priced, then considering the actual price; if the received PNR has not been priced then the at least one data processor estimates a price; the at least one data processor further operates to prorate the actual price or the estimated price to obtain prorated prices for each segment and date of the PNR and to include the prorated prices in a notification sent from said reservation system to said inventory system, where the notification also includes booking-related counters. The inventory system comprises at least one data processor operating under control of software instructions stored in at least one memory to use the prorated prices in conjunction with the booking counters to compute a plurality of monetary-related counters and to output aggregated values of the monetary-related counters to the inventory display system for display to a user of the inventory system.

A corresponding method is disclosed, as is a non-transitory computer-readable medium that contains software program instructions, where execution of the software program instructions by at least one data processor results in performance of operations that comprise execution of the method.

Figure 2

EP 2 605 209 A1

**Description**

TECHNICAL FIELD:

The exemplary embodiments of this invention relate generally to travel reservation methods and systems and, more specifically, relate to computer-implemented inventory systems and reservation systems used in the travel industry.

BACKGROUND:

Certain terms used in the following description are defined as follows:

Passenger Name Record (PNR): A record in a database of a computer reservation system that contains the itinerary for a passenger or a group of passengers.

Leg: A non-stop journey between a "departure" point and an "arrival" point.
Segment: One or more legs, sharing the same commercial transportation number, typically the same commercial flight number in case the segment is an air segment. A segment is a saleable product.
O&D: Origin and Destination - an O&D can be composed of one or several segments.
Interline segment: A segment which is operated by a travel provider, for instance an airline, other than a current reference travel provider, typically a current reference airline. The airline who operates the flight is usually designated participating airline while the airline who markets the flight is usually designated validating airline.
Cabin: Physical section of transport apparatus (aircraft, train, bus, boat etc) such as First Class or Economy (Eco).
Yield: The Yield is defined for each class and O&D and is an estimation of how much revenue the carrier (airline for instance) receives from a sale on the associated O&D/class.
Validating Airline : In case of interlining, a flight or segment may be operated by an airline while another airline markets the flight or the segment. Said other airline is referred to as the Validating Airline. The Validating Airline may operate another segment of the full O&D.
Operating Airline : In case of interlining, a flight or segment may be marketed by an airline while another airline operates the flight or the segment. Said other airline is referred to as the Operating Airline.
Prorating: For a case where more than one travel provider (more than one airline for instance) is involved in a trip, and/or when a validating travel provider is different from a participating travel provider(s), and/or when a ticket comprises several segments, there is a need for prorating. This process enables the splitting of the ticket price (i.e., the price for the whole trip, that the passenger has paid, and that is written on the ticket) to each segment of the trip, so as to assess the revenue share that will be due to each participating travel provider, upon completion of the transportation that the passenger has paid for. Several prorating methods are available. The "straight rate proration" is the most simple as it is based on the relative mileage provided by each carrier, meaning that if a travel provider provides 80% of the total trip mileage, it will receive 80% of the price to be received by the airlines. Various more complex methods exist to implement prorating, for example SPA (Special Prorate Agreement, i.e., bilateral agreements between two travel providers.
Inventory services are very useful for travel providers and in particular to airlines to monitor the current status of their flight date availabilities. Although a primary goal of inventory services is to accept or deny a booking request, advanced features can be included to, for example, adjust availabilities in order to maximize revenue for the airline. These services can be provided by an Inventory System.
A Reservation System, on the other hand, handles all information related to PNRs. When a booking is created or updated the changes are reflected in the PNR. The Inventory System is notified of these changes by messages (notifications) sent by the Reservation System. Each time a flight is booked at a PNR end-of-transaction event corresponding booking counters and availabilities are updated in the Inventory System. Updates are also performed when a PNR is cancelled or is placed in a wait list. With this type of operation inventory availabilities can be known in real time by the Inventory System.
Currently data sent by the Reservation System to the Inventory System are basic in nature. Only the minimum data are sent to the Inventory System to enable the update of availability counters, and no revenue information is included.
In US Patent 7,158,939, "Method and system for improved reporting of issued travel tickets" there is described a method and system that is said to enable airlines to collect revenue when customers seek to exchange an existing ticket for a new ticket on a given airline or other travel provider. In one embodiment, the reporting of ticket sales is performed in real-time, and therefore, the travel agent facilitates collection of an airline-imposed change fee from the customer each time exchange of the existing ticket for a new ticket is required. Alternatively, the airlines may charge a void fee and permit the travel agent to void the existing airline ticket when real-time reporting of sales is performed. In another alternative embodiment, the travel agent may not be allowed to void the ticket. In this US Patent there is no suggestion of revenue reporting counters or tools.

Existing Accounting Systems allow knowing very accurately the actual revenue generated for a given flight or segment. This revenue is the sum of all actual prices of said flight/segment. Although accurate, this revenue data can be known only once all issuances for that flight are complete and only once all prices for each PNR are collected and analyzed. Typically, the revenue cannot be known by the Accounting system before the departure date which is too late for taking immediate actions aiming at increasing the revenue of that flight.

Existing Revenue Management Systems consist in providing a revenue manager analyst with:

- real-time availability and bookings of a given flight, these data being provided by the inventory,
- expected earned revenue based on real-time availability and bookings counters and based on yields.

Since yields are based on historical data and are not actual prices, revenue computed by analyst cannot be very accurate. Such computations are however sufficient to perform long term monitoring through modifying the settings (yield for instance) of the coming flights that are not opened yet. These computations are however not accurate enough to take immediate actions for an already opened flight.

In commonly owned US Patent Application Publication 2009/0063219 A1, "Revenue monitoring method and system, in particular for airline companies", Nathalie Raufaste, Gaelle Bristiel and Denis Arnaud, a method is disclosed for building a revenue database of an airline company comprising revenue information for all electronic tickets involving the airline. The method includes upon issuance and/or update of electronic tickets collecting the tickets in real time from the airline's electronic ticket server; based on the fare information of the collected tickets and a prorating algorithm, obtaining in real time the prorated value for each coupon of said tickets; storing the prorated coupon values in a revenue database in real time. The prorated coupon values constitute elementary revenue information units which can be made available for further processing steps. In order to determine the planned revenue of an airline company for a given future flight on a given departure date, the method includes a further step of generating planned revenue reports for the airline at any desired operational level by aggregating the coupon prorated values at a higher operational level pertaining to the operation of said future flight and departure date. This solution does not provide revenue counters, at the inventory system, in real-time and based on accurate values.

SUMMARY

The foregoing and other problems are overcome, and other advantages are realized, in accordance with the embodiments of this invention.

In a first aspect thereof this invention provides a computer-implemented method to display transportation inventory data. The method comprises, at each new booking: receiving passenger name records (PNRs) associated with at least a particular segment and date at a transportation reservation system; for each received PNR, obtaining a prorated price for each segment and date, including the prorated prices in a notification sent from the transportation reservation system to a transportation inventory system, using the notification at the inventory system to increment at least one booking-related counter; using the prorated prices in conjunction with the booking-related counters to compute at least one monetary-related counter; and outputting aggregated values of the at least one monetary-related counter to an inventory display system for display to a user of the transportation inventory system.

According to an advantageous but non limitative aspect of the above method, the prorated price is an actual price or an informative price (also referred to as estimated price).

The exemplary embodiments also encompass a non-transitory computer-readable medium that contains software program instructions, where execution of the software program instructions by at least one data processor results in performance of operations that comprise execution of the method.

In a further aspect thereof this invention provides a computer-implemented method to display transportation inventory data, comprising the following steps performed at an inventory system: receiving notifications, each notification comprising: a passenger name records (PNRs) associated with at least a particular segment and date; a prorated price associated to the particular segment and date of the received PNR; updating a booking related counter; using the prorated prices in conjunction with the booking-related counters to compute at least a monetary-related counters; displaying the at least one monetary-related counter to a display system.

In a further aspect thereof this invention provides a computer-implemented method to display transportation inventory data, comprising steps of:

displaying at a display system of an inventory system:

at least one booking-related counter for a given segment and date, a booking-related counter representing at least one among: a number of bookings already done for said given segment and date or a number of seats still available for said given segment and date,

at least one monetary-related counter for said given segment and date, the monetary-related counter representing the sum of all booking/segment prices associated to all bookings done for said given segment and date, updating the displays of the booking-related counter and of the at least one monetary-related counter in real-time with each new booking performed for said given segment and date.

In a further aspect thereof this invention provides a computer-implemented method to display transportation inventory data, comprising steps of: displaying at a display system of an inventory system at least one monetary-related counter for a given segment and date, the monetary-related counter representing the sum of all booking/segment prices associated to all bookings done for said given segment and date; updating the displays of the at least one monetary-related counter in real-time with each new booking performed for said given segment and date.

In a further aspect thereof this invention provides a computer-implemented travel reservation and booking system that comprises a reservation system and an inventory system coupled to an output of the reservation system to receive notifications from the reservation system. The inventory system has an output coupled with an inventory display system. The reservation system includes at least one data processor operating under control of software instructions stored in at least one memory to receive passenger name records (PNRs) associated with a particular segment and date and, for each received PNR, to determine if the received PNR has been priced or not; if the received PNR has actually been priced, then considering the actual price; if the received PNR has not been priced then the at least one data processor estimates a price; the at least one data processor further operates to prorate the actual price or the estimated price to obtain prorated prices for each segment and date of the PNR and to include the prorated prices in a notification sent from said reservation system to said inventory system, where the notification also includes booking-related counters. The inventory system comprises at least one data processor operating under control of software instructions stored in at least one memory to use the prorated prices in conjunction with the booking counters to compute a plurality of monetary-related counters and to output aggregated values of the monetary-related counters to the inventory display system for display to a user of the inventory system.

In a further aspect thereof this invention provides a computer-implemented travel reservation and booking system comprising a reservation system coupled to the input of an inventory system where: said reservation system comprises at least one data processor operating under control of software instructions stored in at least one memory to receive passenger name records (PNRs) associated with at least a particular segment and date and, for each received PNR, to determine if the received PNR has been priced or not; if the received PNR has not been priced then the at least one data processor estimates a price; the at least one data processor further operates to prorate the price or the estimated price to obtain prorated prices for each segment and date of the received PNR and to include the prorated prices in a notification sent from said reservation system to said inventory system.

BRIEF DESCRIPTION OF THE DRAWINGS

The foregoing and other aspects of the embodiments of this invention are made more evident in the following Detailed Description, when read in conjunction with the attached Drawing Figures, wherein:

Figure 1 shows a conventional Travel Reservation and Booking system that includes a Reservation System, an Inventory System, an Inventory Display and a Revenue Management System.
Figure 2 shows an improved Travel Reservation and Booking system in accordance with the embodiments of this invention.
Figure 3 is a logic flow diagram that is descriptive of a method and the execution of computer program instructions in accordance with exemplary embodiments of this invention.
Figure 4 illustrates an exemplary display at the Inventory Display shown in Figure 2, where an enhanced (enriched) inventory is displayed to a user.

DETAILED DESCRIPTION

The disclosure of the above-referenced commonly owned US Patent Application Publication 2009/0063219 A1 is incorporated by reference herein.

As employed herein a "counter" can be considered as one or more registers or one or more memory locations in a data processing system that are suitable for storing data.

Before detailing an exemplary embodiment of the invention, some optional features and steps of the invention are mentioned below.

In one embodiment, the computer-implemented method to display transportation inventory data comprises the following steps performed at each new booking: receiving passenger name records (PNRs) associated with at least a particular segment and date at a transportation reservation system; for each received PNR, obtaining a prorated price for each segment and date, including the prorated prices in a notification sent from the transportation reservation system to a transportation inventory system, using the notification at the inventory system to increment at least one booking-related counter; using the prorated prices in conjunction with the booking-related counters to compute at least one monetary-related counter; and outputting aggregated values of the at least one monetary-related counter to an inventory display system for display to a user of the transportation inventory system.

In one embodiment, the step of obtaining, for each received PNR, a prorated price for each segment and date comprises: determining if the received PNR has been priced or not; if the received PNR has been actually priced, then considering said actual price; if the received PNR has not been priced then estimating a price for the received PNR; prorating the actual price or the estimated price of the received PNR. In one embodiment, the at least one of the monetary-related counters is a counter representing the sum of all prorated prices for the particular segment and date and resulting from all received PNRs. In one embodiment, the at least one of the monetary-related counters is a Ticketed Revenue counter representing a sum of all prorated prices for the particular segment and date and resulting from the received PNRs that have been priced. Preferably, a plurality of monetary-related counters are computed and one of the monetary-related counters is an Unticketed Revenue counter representing a sum of all prorated prices for the particular segment and date and resulting from received PNRs for which a price was estimated. Advantageously, one of the monetary-related counters is an Achievable Revenue counter representing a sum of the Ticketed Revenue counters, the Unticketed Revenue counters and a Remaining Revenue, the Remaining Revenue corresponding to a remaining demand for the particular segment and date. In one embodiment, the Remaining Revenue is computed by using forecast bookings (FB) minus already observed bookings (OB)) multiplied by an average yield of associated booking classes. Preferably, the method comprises updating the plurality of monetary-related counters in real-time as PNRs are received for the particular segment and date. In one embodiment, obtaining the prorated price for the segment and date is based on straight rate proration using relative mileage provided by each of a plurality of carriers. In one embodiment, obtaining the prorated price for the segment and date is based on a bilateral proration agreement between a plurality of carriers. Advantageously, computing at least one monetary-related counter comprises an initial step of converting the prorated prices received in the notification from a local currency of a customer who booked the associated PNR to a base currency used by the inventory system. Preferably, the method comprises a step of using the at least one monetary-related counter for a range of segment dates to detect a presence of segments having a value of revenue that is greater than or less than some threshold value. Preferably, the method comprises using the at least one monetary-related counter for a range of transportation dates to detect a presence of transportations having a value of revenue that is greater than or less than some threshold value, each transportation comprising at least a segment. In one embodiment, the method comprises a step of using the at least one monetary-related counter to identify point-of-sale locations generating revenue. Preferably, the method comprises a step of using the at least one monetary-related counter to generate a report summarizing historical revenue and monetary information to indicate revenue generated, revenue committed, and revenue lost. In one embodiment, the segment is an air segment and the transportation inventory system is a transportation inventory system.

In one embodiment, the computer-implemented method to display transportation inventory data, comprises steps of: at an inventory system, receiving notifications, each notification comprising: a passenger name records (PNRs) associated with at least a particular segment and date; a prorated price associated to the particular segment and date of the received PNR; updating a booking related counter; using the prorated prices to compute at least a monetary-related counters; displaying the at least one monetary-related counter to a display system. Preferably, the at least one of the monetary-related counters is a counter representing the sum of all prorated prices associated to the particular segment and date.

In one embodiment, the computer-implemented method to display transportation inventory data, comprises steps of: displaying at a display system of an inventory system: at least one booking-related counter for a given segment and date, a booking-related counter representing at least one among: a number of bookings already done for said given segment and date or a number of seats still available for said given segment and date; at least one monetary-related counter for said given segment and date, the monetary-related counter representing the sum of all booking/segment prices associated to all bookings done for said given segment and date; updating the displays of the booking-related counter and of the at least one monetary-related counter in real-time with each new booking performed for said given segment and date.

In one embodiment, the computer-implemented method to display transportation inventory data, comprises steps of: displaying at a display system of an inventory system at least one monetary-related counter for a given segment and date, the monetary-related counter representing the sum of all booking/segment prices associated to all bookings done for said given segment and date; updating the displays of the at least one monetary-related counter in real-time with each new booking performed for said given segment and date.

In one embodiment, a computer-implemented travel reservation and booking system comprises: a reservation system and an inventory system coupled to an output of said reservation system to receive notifications from the reservation system and further having an output coupled with an inventory display system. Said reservation system comprises at least one data processor operating under control of software instructions stored in at least one memory to receive passenger name records (PNRs) associated with a particular segment and date and, for each received PNR, to determine if the received PNR has been priced or not; if the received PNR has actually been priced, then considering the actual price; if the received PNR has not been priced then the at least one data processor estimates a price; the at least one data processor further operates to prorate the actual price or the estimated price to obtain prorated prices for each segment and date of the PNR and to include the prorated prices in a notification sent from said reservation system to said inventory system, the notification also includes booking-related counters. Said inventory system comprises at least one data processor operating under control of software instructions stored in at least one memory to use the prorated prices in conjunction with the booking-related counters to compute a plurality of monetary-related counters and to output aggregated values of the monetary-related counters to said inventory display system for display to a user of said inventory system.

Preferably, the at least one of the monetary-related counters is a counter representing the sum of all prorated prices associated to the particular segment and date. Advantageously, one of the monetary-related counters is a Ticketed Revenue counter representing a sum of all booking/segment prices resulting from the received PNRs that have been priced, one of the monetary-related counters being an Unticketed Revenue counter representing a sum of all booking/segment prices resulting from received PNRs for which a price was estimated, and one of the monetary-related counters being an Achievable Revenue counter representing a sum of the Ticketed Revenue counters, the Unticketed Revenue counters and a Remaining Revenue, the Remaining Revenue corresponding to a remaining demand for the flight-date. In one embodiment, the Remaining Revenue is computed by using forecast bookings (FB) minus already observed bookings (OB)) multiplied by an average yield of associated booking classes. Preferably, the system is configured to use the plurality of monetary-related counters in real-time as PNRs are received for the particular segment and date. In one embodiment, the system is configured to operate the prorate based on one of straight rate proration using relative mileage provided by each of a plurality of carriers or is based on a bilateral proration agreement between a plurality of carriers. In one embodiment, the at least one data processor of said inventory system is configured to compute the plurality of monetary-related counters by initially converting prices received in the notification from a local currency of a customer who booked the associated PNR to a base currency used by said inventory system. In one embodiment, the system is further configured to use the monetary-related counters to at least one of detect a presence of transportations having a value of revenue that is greater than or less than some threshold value; to identify point-of-sale locations generating revenue; and to generate a report summarizing historical revenue and monetary information to indicate revenue generated, revenue committed, and revenue lost.

In one embodiment, the computer-implemented travel reservation and booking system comprises a reservation system coupled to the input of an inventory system where: said reservation system comprises at least one data processor operating under control of software instructions stored in at least one memory to receive passenger name records (PNRs) associated with at least a particular segment and date and, for each received PNR, to determine if the received PNR has been priced or not; if the received PNR has not been priced then the at least one data processor estimates a price; the at least one data processor further operates to prorate the price or the estimated price to obtain prorated prices for each segment and date of the received PNR and to include the prorated prices in a notification sent from said reservation system to said inventory system.

The exemplary embodiments of this invention improve on the known approaches by implementing revenue counters directly in a flight/date's inventory, enabling an end-user (e.g., airline agent) to directly change parameters of a given flight date and more precisely of a given segment and date. In addition, the use of the exemplary embodiments does not rely only on sold tickets in order to determine "planned revenue". Instead, the exemplary embodiments provide novel counters that are based on tickets which have already been sold, and that also take into account "expected to board" and "yields" figures to accurately estimate a complete forecast of revenue of a future flight date.

Conventional (legacy) airline inventory systems only maintain counters needed to reply to availability requests received from reservation systems.

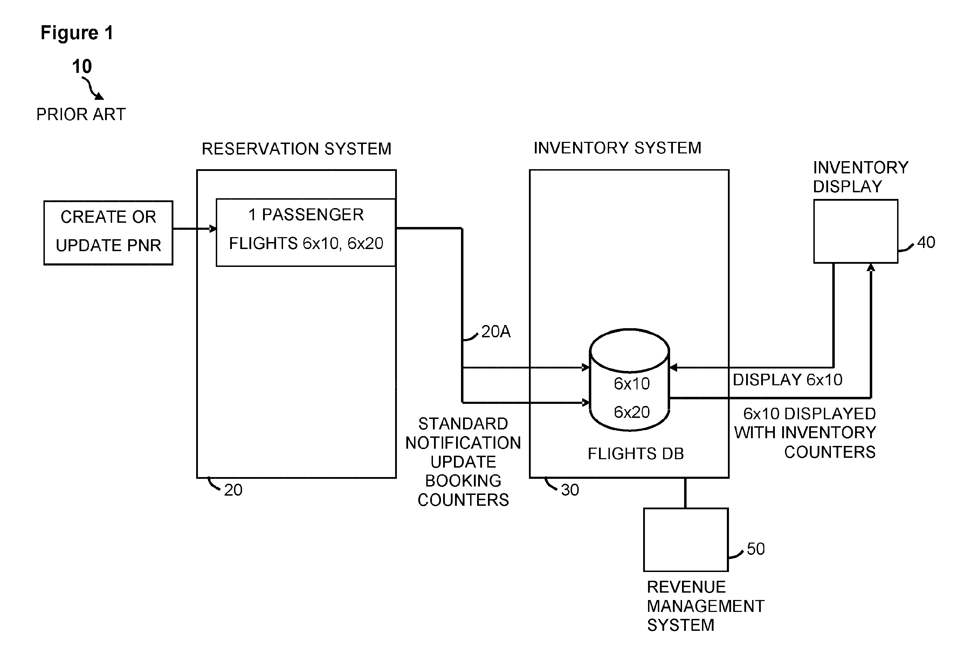

Figure 1 shows a conventional Travel Reservation and Booking system 10 that includes a Reservation System 20, an Inventory System 30, an Inventory Display 40 and a Revenue Management System 50. Assume as an example that a booking is performed for one passenger on flights 6X 10 and 6X 20. In this case a standard notification 20A is sent to the Inventory System 30 from the Reservation System 20 informing the Inventory System that one booking was performed on the two flight dates.

The use of the exemplary embodiments of this invention enables the display of revenue information directly within a given flight date inventory in addition to the standard inventory counters. This is accomplished by providing a tight linkage between the Reservation System 20 and the Inventory System 30 of an airline.

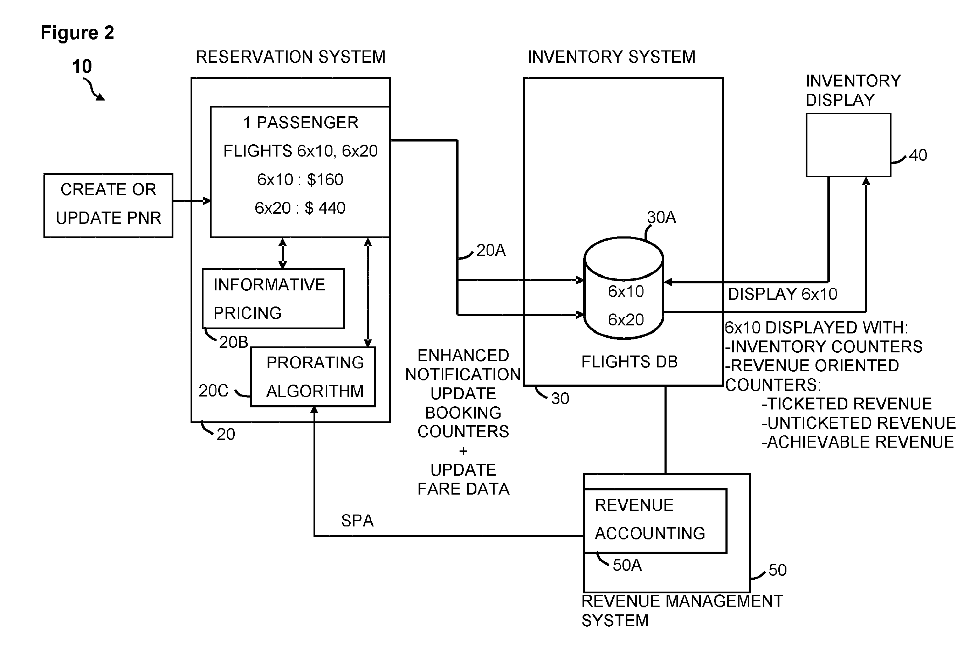

Figure 2 shows the enhancements made possible by the use of this invention, where the notification 20A is enriched with additional price-related data. In this example, an Informative Pricing module 20B gives a price of $600 for the entire PNR. With application of a Prorating Algorithm 20C a price of $160 is assigned to flight 6X 10 and a price of $440 to is assigned to flight 6X 20. This information is used to enhance the notification 20A sent to the Inventory System 30. When an airline agent viewing the Inventory Display 40 wants to display the inventory of a flight, booking record counters are included based on the enhanced notification data saved in the Flights database (DB) 30A.

In operation the enhanced notification 20A is sent from the Reservation System 20 to the Inventory System 30 as soon as a booking is made or is modified so that the Inventory System 30 can update its counters (e.g., in Flights DB 30A). The notification is enhanced with price information of each air segment booked by the passenger. This enables revenue counters in the Inventory System 30 to be displayed in real time. In the context of the present invention, having a revenue counter updated and displayed in real-time means that it takes less than one minute (possibly just a few seconds) (possibly just a few seconds) to display the update of the revenue counter once a booking is complete Preferably, availability counters and a revenue counters are updated and displayed simultaneously.

The Inventory System 30 can also be connected to the Revenue Management System 50. This enables a flight date inventory to be enhanced with expected to board counters and yields. Using this data the exemplary embodiments of this invention also enable the display of forecasted revenue counters.

The novel counters and the use of same can be combined with reporting tools, which may be already available in the Inventory System 30, to highlight flight dates on which forecast revenues are below a given threshold.

An aspect of the exemplary embodiments of this invention is an enrichment and enhancement of the notification (message) 20A sent from the Reservation System 20 to the Inventory System 30. The enhancement includes ticketing status and real (actual) pricing. If the real pricing is not known it is replaced by informative pricing by the Informative Pricing module 20B.

The price of a PNR that has been priced (priced booking) can be referred to as an actual price or real price. Such pricing can be referred to as an actual pricing. The price of a PNR that has not been actually priced (non-priced booking or unknown pricing) but that has been estimated can be referred to as an estimated price or an informative price. Such pricing can be referred to as an informative pricing or an estimated pricing.

Thus a prorated price for a segment/date can be associated to a PNR that has actually been priced or for which a price has been estimated.

In the present description, the couple formed by a segment and a date is referred to as "segment and date" or "segment/date".

By the use of this enhancement novel revenue-oriented counters in the Flights DB 30A can be computed at the Inventory System 30 and provided to an airline analyst at the Inventory Display 40. The counters 30A can be displayed directly in the inventory display of a particular flight date, with real-time data.

The foregoing aspect of the exemplary embodiments includes at least two components:

a) an enhancement of the notification 20A sent by the Reservation System 20 to the Inventory System 30, with estimated or real (actual) ticketing data; and

b) the use of this additional information to compute the monetary-oriented counters stored in the Flights DB 30A of the Inventory System 30.

In a typical use case pricing data are known at the Reservation System 20 only when a PNR is ticketed. In addition, when the PNR is handled by another Reservation System (e.g., the Reservation System of another airline), the copy of the PNR sent to other systems may not include the pricing data. In accordance with an aspect of this invention informative pricing is performed to compute pricing data, even if the PNR is not ticketed or if the PNR is handled by another Reservation System. The Prorating Algorithm 20C is used to compute the informative pricing at the flight segment and date level, and is thus very useful in the context of interlining.

Some examples and use cases where the PNR can be created (booking complete) without generating an issuance of the ticket, thus without triggering a pricing for that PNR, are presented below:

- Travel agencies can book several flights for a client which has no precise date yet. Thus, several PNR will be created, but only one of these PNRs will be confirmed and ticketed.
- Corporate travel agencies allow creation of PNRs with booking, but pricing is only done when the PNR is confirmed / ticked.
- An individual person on a website can pay an extra fee to have additional time to pay (48hours for instance) and keep his booking confirmed.
- In case of massive re-accomodations following a general disruption there are some important issues with re-created bookings for which no tickets are reissued.

Discussed now are the monetary oriented counters at the Inventory System 30. Typically only booking figures are provided to the Inventory System 30, and no monetary-related information is provided. However, in accordance with the exemplary aspects of this invention monetary information is used and aggregated to compute counters at different levels.

A first of these levels is a segment class level. In this case, and with the ticketed status, new counters can be computed such as ticketed bookings, priced bookings and non-priced bookings. With a prorated price new counters can be displayed such as a sum of prorated prices included in PNRs for which the actual pricing is known and a sum of prorated prices included in PNRs for which the pricing has been estimated. With such informative pricing the revenue expected for non-priced bookings, or priced by another Reservation System, can be computed. In addition, and for inventories enriched with yield values and expected-to-board counters, a complete expected revenue can be deduced.

A second of these levels is a flight date level. In this case, and at the flight date level, all of the above mentioned counters can be aggregated to compute a current revenue generated and a full (an entire) expected revenue.

A third of these levels is a flight range level. The inventory system can already include reports which goal is to help an airline analyst to detect irregular flights. In this case, these reports that parse a range of flight dates can read the counters to detect a presence of "abnormal" flights (i.e., those flights having a value of revenue that is greater than or less than some threshold value).

A fourth of these levels is a point of sale (POS) level. In this case reports aggregating information of a full flight network, or only a part of the flight network, at the POS level can be constructed to identify PoS (countries, travel agencies, etc...) which generates an abnormal amount of revenue.

A fifth one of these levels is a time level. In this case reports summarizing revenue and monetary information for a given date range (days, weeks, months, etc...) can be constructed to show the revenue generated, revenue committed, and revenue lost due to cancellations in a given time window. This can be used to analyze the effects of a promotional campaign for instance.

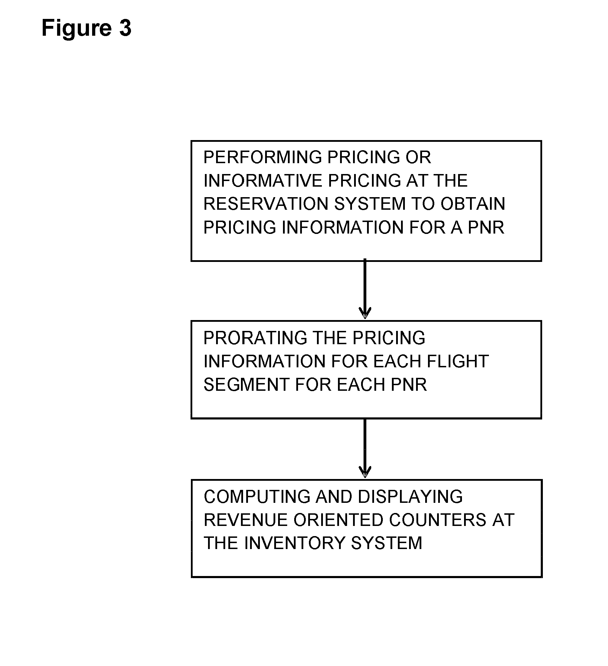

During operation of the improved system 10 of Figure 2 three successive operations can be performed. The first two operations are performed at the Reservation System 20 and the third operation at the Inventory System 30. These three operations are described below and are also depicted in Figure 3.

1. The first operation involves one of actual pricing or informative pricing performed by the Reservation System 20. At the Reservation System 20 a particular PNR can be either priced or non-priced. For the case of a priced PNR control passes to the second operation below. For a non-priced PNR (e.g., the PNR was created in another Reservation System or the PNR has not been yet ticketed) the Informative Pricing module 20B is activated to estimate the price associated with the PNR. This informative pricing can be considered as the pricing process of a conventional pricing and ticketing process, the ticketing steps being not performed.

Further in this regard the Informative Pricing module 20B can, by example, estimate the price based on (e.g., average) current public fares of the airline. This may be a preferred technique. If the PNR was generated by another airline the Informative Pricing module 20B can consult data received from a third party. A third party can be a company that automatically generates many reservation requests in order to populate a database of available fares, and this database can then be made available to an airline as it provides important information regarding the fares offered by competitors of the airline.

Once the fare is known, the price can be computed. For instance, the price is computed through applying rules to the fare. The rules may relate to the profile of the traveler (age, student etc.), to the date of the flight, to the duration between two flights, to a special discount etc. Preferably, in the present invention, the prices do not incorporate additional amounts that do not depend of the airlines. Such additional amounts are for instance airport taxes, environmental taxes, fuel surcharge etc.

2. In the second operation the Prorating Algorithm 20C is activated by the Reservation System 20 (for each segment). The price given by the pricing (actual pricing or estimated pricing) of a PNR is a price that includes all segment dates present in the PNR. In order to compute a price per segment date the Prorating Algorithm 20C uses, for example, the SPA (special prorate agreement) contained in a Revenue Accounting module 50A of the Revenue Management System 50 of the airline. The operation of the Prorating Algorithm 20C can be replaced by an informative Prorating approach, e.g., one based simply on mileage, if all required SPA data are not available. Thus, the Prorating Algorithm 20C provides a prorated price for each segment and date (also referred to as prorated price for a segment/date).

3. In the third operation the revenue oriented counters are computed and displayed at the Inventory System 30. Due to the execution of the first two operations at the Reservation system 20 the notification 20A sent by the Reservation System 20 to the Inventory System 30 is enhanced with price information computed at the flight segment date level. At the reception of the notification 20A the prices are stored in the Flights database 30A along with the booking information. The prices received by the Inventory System 30 are received in the local currency of the customer who is performing the booking. Thus, the Inventory System 30 also retrieves and stores the applicable exchange rate between the local currency and base currency of the airline at the time of the booking. This sub-operation increases the accuracy of the reporting and takes into account exchange rate variations. The result is that the flight dates are enriched with price information. The revenue-oriented counters can then be computed and displayed to the airline users (e.g., to revenue management experts) who display flight data inventories.

In the foregoing operations the unit element is a price (informative for a non-ticketed passenger (PNR) or real (actual) for a ticketed passenger) for each booking/segment. Several aggregated counters are constructed based on this unit element. The following is an exemplary list of counters that are computed by the Inventory System 30 at the leg-cabin level. The output of the counters is shown in Figure 2 at the output of the Inventory System 30.

A first counter is a Ticketed Revenue counter. This counter represents the sum of all booking/segment prices resulting from the ticketing of the underlying PNR.

A second counter is an Unticketed Revenue counter. This counter represents the sum of all booking/segment prices resulting from an informative pricing quote (by the Informative Pricing module 20B) of the underlying PNR.

A third counter is an Achievable Revenue counter. This counter represents the sum of the Ticketed Revenue counter, the Unticketed Revenue counter and a Remaining Revenue. The Remaining Revenue corresponds to a remaining demand (forecast of bookings ($F_B$) minus already observed bookings ($O_B$)) multiplied by an average yield ($A_Y$) of the associated booking classes:

$$\text{Achievable Revenue} = (F_B - O_B)A_Y.$$

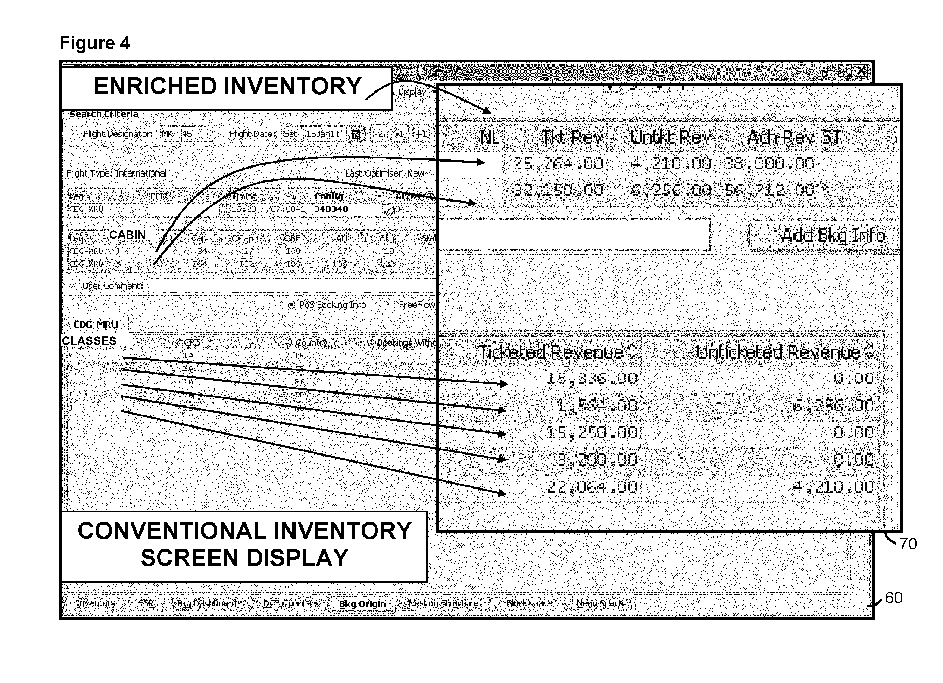

Figure 4 shows an example of information that can be displayed on the Inventory Display 30. A typical (conventional) Inventory screen 60 is displayed for a particular flight between CDG and MRU. The conventional Inventory screen 60 will include various types of information such as booking classes, a number of bookings per class and an availability that takes into account the number of bookings and settings of the Revenue Management system 50.

In accordance with the embodiments of this invention the Inventory display 60 is enriched by a display 70 that includes the monetary-related counters data. In this example for a leg having two cabins J and Y there is itemized the Ticketed Revenue, the Unticketed revenue and the Achieved Revenue as described above. For each of a plurality of classes M, G, Y, C, J the Ticketed Revenue and the Unticketed Revenue is also displayed. The display 70 can be integrated into the Inventory screen 60 display or it can be provided as a pop-up block or banner (as shown). The novel revenue-oriented counters computed at the Inventory System 30 can thus be provided to an airline analyst at the Inventory Display 40, and displayed directly in the inventory display of a particular flight date, with real-time data.

As should be realized the Reservation System 20 and the Inventory System 30 can each comprise at least one data processor operating under control of software instructions stored in at least one memory. The Reservation System 20 and the Inventory System 30 can be implemented as respective servers co-located at one installation or they may be geographically distributed and interconnected via any type of suitable data communication network. Further, in some embodiments the functionality of the Reservation System 20 and the Inventory System 30 can be integrated into one computing platform. In this case the notification path can be an internal path (e.g., a virtual path) implemented in any suitable manner within the hardware/software architecture of the computing platform.

The foregoing description has provided by way of exemplary and nonlimiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent algorithms and data representations may be attempted by those skilled in the art. Further, the various names used for the different elements and functions (e.g., Ticketed Revenue counter, Unticketed Revenue counter, Achievable Revenue counter, etc.) are merely descriptive and are not intended to be read in a limiting sense, as these various elements and functions can be referred to by any suitable names. All such and similar modifications of the teachings of this invention will still fall within the scope of the embodiments of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

**Claims**

1. A computer-implemented method to display transportation inventory data, **characterized in that** it comprises the following steps performed at each new booking:

   - receiving passenger name records (PNRs) associated with at least a particular segment and date at a transportation reservation system;
   - for each received PNR, obtaining a prorated price for each segment and date,
   - including the prorated prices in a notification sent from the transportation reservation system to a transportation inventory system,
   - using the notification at the inventory system to increment at least one booking-related counter;
   - using the prorated prices in conjunction with the booking-related counters to compute at least one monetary-related counter; and
   - outputting aggregated values of the at least one monetary-related counter to an inventory display system for display to a user of the transportation inventory system.

2. The method of claim 1, where the step of obtaining, for each received PNR, a prorated price for each segment and date comprises:

   - determining if the received PNR has been priced or not;
   - if the received PNR has been actually priced, then considering said actual price;
   - if the received PNR has not been priced then estimating a price for the received PNR;
   - prorating the actual price or the estimated price of the received PNR.

3. The method of claim 1, where the at least one of the monetary-related counters is a counter representing the sum of all prorated prices for the particular segment and date and resulting from all received PNRs.

4. The method of claim 2, where the at least one of the monetary-related counters is a Ticketed Revenue counter representing a sum of all prorated prices for the particular segment and date and resulting from the received PNRs that have been priced.

5. The method of claim 4, where a plurality of monetary-related counters are computed and where one of the monetary-related counters is an Unticketed Revenue counter representing a sum of all prorated prices for the particular segment and date and resulting from received PNRs for which a price was estimated.

6. The method of claim 5, where one of the monetary-related counters is an Achievable Revenue counter representing a sum of the Ticketed Revenue counters, the Unticketed Revenue counters and a Remaining Revenue, where Remaining Revenue corresponds to a remaining demand for the particular segment and date.

7. The method of claim 6, where the Remaining Revenue is computed by using forecast bookings (FB) minus already observed bookings (OB)) multiplied by an average yield of associated booking classes.

8. The method according to any one of claims 1 to 7, further comprising updating the plurality of monetary-related counters in real-time as PNRs are received for the particular segment and date.

9. The method according to any one of claims 1 to 7, where obtaining the prorated price for the segment and date is based on straight rate proration using relative mileage provided by each of a plurality of carriers.

10. The according to any one of claims 1 to 7, where obtaining the prorated price for the segment and date is based on a bilateral proration agreement between a plurality of carriers.

11. The method according to any one of claims 1 to 7, where computing at least one monetary-related counter comprises an initial step of converting the prorated prices received in the notification from a local currency of a customer who booked the associated PNR to a base currency used by the inventory system.

12. The method according to any one of claims 1 to 7, further comprising using the at least one monetary-related counter for a range of segment dates to detect a presence of segments having a value of revenue that is greater than or less than some threshold value.

**13.** The method according to any one of claims 1 to 7, further comprising using the at least one monetary-related counter for a range of transportation dates to detect a presence of transportations having a value of revenue that is greater than or less than some threshold value, each transportation comprising at least a segment.

**14.** A non-transitory computer-readable medium that contains software program instructions, where execution of the software program instructions by at least one data processor results in performance of operations that comprise execution of the method as in any one of claims 1-13.

**15.** A computer-implemented travel reservation and booking system **characterized in that** it comprises:

- a reservation system; and
- an inventory system coupled to an output of said reservation system to receive notifications from the reservation system and further having an output coupled with an inventory display system, where
- said reservation system comprises at least one data processor operating under control of software instructions stored in at least one memory to receive passenger name records (PNRs) associated with a particular segment and date and, for each received PNR, to determine if the received PNR has been priced or not; if the received PNR has actually been priced, then considering the actual price; if the received PNR has not been priced then the at least one data processor estimates a price; the at least one data processor further operates to prorate the actual price or the estimated price to obtain prorated prices for each segment and date of the PNR and to include the prorated prices in a notification sent from said reservation system to said inventory system, where the notification also includes booking-related counters; and where
- said inventory system comprises at least one data processor operating under control of software instructions stored in at least one memory to use the prorated prices in conjunction with the booking-related counters to compute a plurality of monetary-related counters and to output aggregated values of the monetary-related counters to said inventory display system for display to a user of said inventory system.

**Figure 1**

**10**

PRIOR ART

RESERVATION SYSTEM INVENTORY SYSTEM

INVENTORY
DISPLAY

| CREATE OR UPDATE PNR | 1 PASSENGER FLIGHTS 6x10, 6x20 |

20A

STANDARD
NOTIFICATION
UPDATE
BOOKING
COUNTERS

20

6x10
6x20

FLIGHTS DB

30

DISPLAY 6x10

6x10 DISPLAYED
WITH INVENTORY
COUNTERS

40

50

REVENUE
MANAGEMENT
SYSTEM

EP 2 605 209 A1

**Figure 2**

RESERVATION SYSTEM

INVENTORY SYSTEM

INVENTORY DISPLAY

CREATE OR UPDATE PNR

1 PASSENGER
FLIGHTS 6x10, 6x20
6x10 : $160
6x20 : $ 440

INFORMATIVE PRICING

PRORATING ALGORITHM

ENHANCED NOTIFICATION UPDATE BOOKING COUNTERS + UPDATE FARE DATA

FLIGHTS DB

6x10
6x20

DISPLAY 6x10

6x10 DISPLAYED WITH:
-INVENTORY COUNTERS
-REVENUE ORIENTED
COUNTERS:
    -TICKETED REVENUE
    -UNTICKETED REVENUE
    -ACHIEVABLE REVENUE

REVENUE ACCOUNTING

SPA

REVENUE MANAGEMENT SYSTEM

EP 2 605 209 A1

# Figure 3

```
┌─────────────────────────────────────┐
│  PERFORMING PRICING OR               │
│  INFORMATIVE PRICING AT THE          │
│  RESERVATION SYSTEM TO OBTAIN        │
│  PRICING INFORMATION FOR A PNR       │
└─────────────────────────────────────┘
                    │
                    ▼
┌─────────────────────────────────────┐
│  PRORATING THE PRICING               │
│  INFORMATION FOR EACH FLIGHT         │
│  SEGMENT FOR EACH PNR                │
└─────────────────────────────────────┘
                    │
                    ▼
┌─────────────────────────────────────┐
│  COMPUTING AND DISPLAYING            │
│  REVENUE ORIENTED COUNTERS AT        │
│  THE INVENTORY SYSTEM                │
└─────────────────────────────────────┘
```

## Figure 4

**ENRICHED INVENTORY**

Search Criteria

Flight Designator: MK 45    Flight Date: Sat 15Jan11 [ ] [-7] [-1] [+1]

Flight Type: International                          Last Optimiser: New

| Leg | FLIX | Timing | Config | Aircraft T |
|-----|------|--------|--------|-----------|
| CDG-MRU | | ...16:20 /07:00+1 | 340340 | ...343 |

| Leg | CABIN | Cap | OCap | OBF | AU | Bkg | Sta |
|-----|-------|-----|------|-----|-----|-----|-----|
| CDG-MRU | J | 34 | 17 | 100 | 17 | 10 | |
| CDG-MRU | Y | 264 | 132 | 103 | 136 | 122 | |

User Comment:

○ PoS Booking Info    ○ FreeFlow

CDG-MRU

| CLASSES | CRS | Country | Bookings Witho |
|---------|-----|---------|----------------|
| M | 1A | FR | |
| G | 1A | FR | |
| Y | 1A | RE | |
| C | 1A | FR | |
| J | 1A | MU | |

**CONVENTIONAL INVENTORY SCREEN DISPLAY**

ture: 67    Display

| NL | Tkt Rev | Untkt Rev | Ach Rev | ST |
|----|---------|-----------|---------|-----|
| | 25,264.00 | 4,210.00 | 38,000.00 | |
| | 32,150.00 | 6,256.00 | 56,712.00 | * |

Add Bkg Info

| Ticketed Revenue ◇ | Unticketed Revenue ◇ |
|--------------------|----------------------|
| 15,336.00 | 0.00 |
| 1,564.00 | 6,256.00 |
| 15,250.00 | 0.00 |
| 3,200.00 | 0.00 |
| 22,064.00 | 4,210.00 |

70

60

Inventory   SSR   Bkg Dashboard   DCS Counters   **Bkg Origin**   Nesting Structure   Block space   Nego Space

EP 2 605 209 A1

**EP 2 605 209 A1**

<table>
<tr><td colspan="3" align="center">Europäisches Patentamt<br>European Patent Office<br>Office européen des brevets</td><td colspan="2" align="center">**EUROPEAN SEARCH REPORT**</td><td align="center">Application Number<br>EP 11 30 6650</td></tr>
</table>

| | DOCUMENTS CONSIDERED TO BE RELEVANT | | | |
|---|---|---|---|---|

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-15 | INV.<br>G06Q50/14<br>G06Q10/02<br>G06Q10/08<br><br><br>TECHNICAL FIELDS SEARCHED (IPC)<br><br>G06Q |

| The present search report has been drawn up for all claims | | |
|---|---|---|
| Place of search<br>The Hague | Date of completion of the search<br>10 May 2012 | Examiner<br>Bassanini, Anna |

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7158939 B

- US 20090063219 A1